# EUROPÄISCHE PATENTSCHRIFT

(11) **EP 1 491 814 B1**
(45) Veröffentlichungstag und Bekanntmachung des Hinweises auf die Patenterteilung: **01.04.2009**
(21) Anmeldenummer: 04102897.8
(22) Anmeldetag: 23.06.2004
(51) Int. Cl.: F16M 7/00

(54) **Befestigungsvorrichtung eines Maschinenfusses einer Maschine und Verfahren zur Befestigung desselben**
Device for securing a machine foot and method of securing the same
Dispositif de fixation d'un pied de machine et procédé de fixation de celui-ci

(30) Priorität: 27.06.2003 CH 114103
(43) Veröffentlichungstag der Anmeldung: 29.12.2004
(73) Patentinhaber: Alstom Technology Ltd, 5400 Baden (CH)
(72) Erfinder: Behlinger, Thomas, 79725 Laufenburg (DE); Kunz, Manfred, 79774 Albbruck (DE); Olive, Thomas, 8400 Winterthur (CH); Prochazka, Michael Lukas Dong Yong, 5333 Baldingen (CH)

(56) Entgegenhaltungen:
- CH-A- 659 873
- CH-A5- 676 876
- DE-A1- 2 011 468
- DE-A1- 2 304 132
- DE-A1- 2 524 682
- DE-A1- 4 139 387
- DE-A1- 4 227 924
- DE-A1- 4 335 485
- DE-A1- 10 009 072
- DE-C- 439 891
- US-A- 2 952 947
- US-A- 3 401 733

## Beschreibung

### TECHNISCHES GEBIET

Die Erfindung bezieht sich auf eine Befestigungsvorrichtung eines Maschinenfusses gemäss dem Anspruch 1 und auf ein Verfahren zur Befestigung eines Maschinenfusses einer Maschine gemäss dem Anspruch 6.

### STAND DER TECHNIK

Zur Befestigung von Maschinen oder sonstigen Bauteilen auf ihrem meist aus Beton vorgefertigtem Fundament werden üblicherweise Fundamentanker verwendet. Die dabei eingesetzten Ankerschrauben oder -bolzen werden mit ihrem unteren Gewindeschaft in Gewindeplatten eingeschraubt, welche im oder am Fundament befestigt sind. Mit ihrem oberen Gewindeschaft wird die zu befestigende Maschine am Maschinenfuss mittels einer Mutter befestigt. Die Fundamentanker insbesondere von grossen Maschinen müssen für die direkte Übertragung von sehr grossen Kräften (meist Störfallkräfte) ausgelegt sein und verhindern ein Abheben der Maschine vom Fundament. Daneben müssen Ausgleichselemente vorgesehen werden, um die Maschinen bzw. einen ganzen Maschinensatz ausrichten zu können.

Solche Fundamentanker sind beispielsweise aus den Schriften US-A-2,952,947, DE-OS-25 24 682, US-A-3,401,733, DE-A1-42 27 924, DE-A1-41 39 387, CH-A5-676 876, DE-A1-43 35 485, DE-A1-100 09 072 oder aus DE-OS-2 011 468 bekannt.

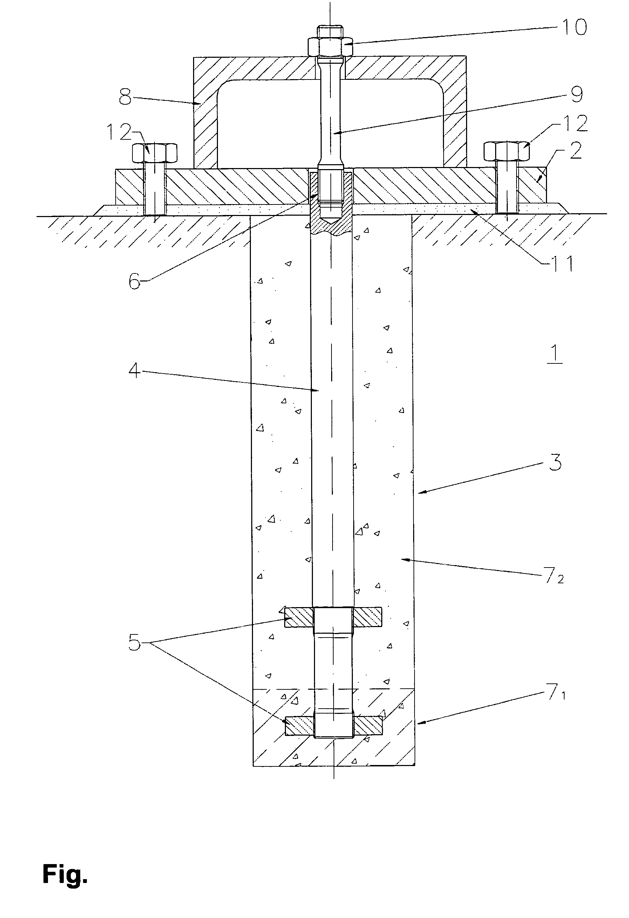

Viele dieser Ausführungsformen benutzen entweder Mittel zum Ausgleich der Höhe oder es sind alternativ Keile (CH-A5-676 876, Fig. 1) zum Ebenheitsausgleich angeordnet. Nachteilig ist jedoch an DE-OS-25 24 682, DE-OS-2 304 132, sowie an DE-A1-41 39 387, dass die Maschine nicht über eine ebene Oberfläche auf das Hauptfundament geschoben werden kann.

Die Schrift DE-OS-2 304 132 offeriert eine Lösung, einen Ankerschaft in dem Fundament zu verankern und den Maschinenfuss zu verspannen. Es ist weiter ein räumlich verstellbares Auflager vorhanden, welches höhenverstellbar ist, und gleichzeitig mit einer Einstellschraube zum Ebenheitsausgleich ausgestattet ist. Wenig vorteilhaft ist zum einen allerdings, dass das Auflager in das Fundament eingegossen wird. Zum anderen ragen die Verankerungsteile während der Montage aus dem Fundament heraus. Diese stehen somit während der Aufstellung der Maschine im Weg. Zusätzlich besteht durch die herausstehenden Ankerbolzen Verletzungsgefahr.

### DARSTELLUNG DER ERFINDUNG

Die vorliegende Erfindung, wie sie in den Ansprüchen gekennzeichnet ist, möchte die Nachteile, welche aus dem Stand der Technik bekannt sind, vermeiden. Die Erfindung löst die Aufgabe, ein Verfahren zur Befestigung eines Maschinenfusses und zusätzlich die Befestigung eines Maschinenfusses einer Maschine zu schaffen, welche sich durch eine einfache Konstruktionsweise auszeichnet. Dadurch soll insbesondere erreicht werden, dass die Komplexität der Befestigung verringert wird.

Vorteilhaft ist, dass der Ankerschaft im Fundament abgesenkt ist, so dass das Aufstellen der Maschine in keiner Weise beeinträchtigt wird. Die eigentliche Montage erfolgt dann über eine Dehnschraube bzw. einen Gewindebolzen, welche/r durch die Fundamentplatte und den Maschinenfuss hindurch in den oberen Teil des Ankerschafts eingeschraubt und verspannt wird. Die Dehnschraube oder der Gewindebolzen bzw. das Verankerungssystem kann hydraulisch oder durch einen Drehmomentenschlüssel vorgespannt werden.

Weitere vorteilhafte Ausführungsformen sind Gegenstand der abhängigen Ansprüche.

### KURZE BESCHREIBUNG DER ZEICHNUNG

Die Erfindung wird anhand der beigefügten Figur illustriert, welche ein Fundament einer Maschine mit einem innenliegenden Ankerschaft zeigt. Es werden nur die für die Erfindung wesentlichen Elemente dargestellt.

### WEG ZUR AUSFÜHRUNG DER ERFINDUNG

Es ist ein Verfahren zur Befestigung eines Maschinenfusses 8 einer Maschine auf einem Fundament 1, sowie eine entsprechende Befestigungseinrichtung beschrieben. Beides wird anhand der beigefügten Figur näher erläutert. In einem speziellen Ausführungsbeispiel handelt es sich bei der zu befestigenden Maschine um eine thermische Turbomaschine oder Teile, davon also z.B. um eine Gas- oder Dampfturbine, einen Verdichter, einen Generator oder um ein Getriebe. Die vorliegende Erfindung ist aber keinesfalls darauf beschränkt.

Wie in der einzigen Figur dargestellt, besitzt das Fundament 1 eine Fundamentaussparung 3. Innerhalb dieser Fundamentaussparung 3 befindet sich ein Ankerschaft 4. In der Figur weist der Ankerschaft 4 am unteren Ende zwei voneinander versetzt angeordnete Gewindescheiben 5 auf. Der Ankerschaft 4 ist zwischen beiden Gewinden im Schaftdurchmesser verjüngt, sodass die obere Gewindescheibe 5 über das untere Gewinde des Ankerschafts 4 geschraubt werden kann.

Danach wird in die Fundamentaussparung 3 zuerst eine erste Schicht Beton 7₁ ei n-gefüllt, so dass mindestens die untere Gewindescheibe 5 eingegossen wird. Nach dem Aushärten der ersten Schicht 7₁ wird eine zweite Schicht Beton 7₂ eingefüllt, die den restlichen Teil der Fundamentaussparung 3 füllt. Diese Gewindescheiben 5, die jeweils mit Gewinden am Ankerschaft 4 befestigt sind, bilden im Zusammenspiel mit der mit Beton 7₁, 7₂ gefüllten Fundamentaussparung 3 ein Gegenlager bzw. ein Anschlag, so dass nach der erfolgten Befestigung eine Verspannung des Maschinenfusses 8 erreicht werden kann. Die Gewindescheiben 5 sind durch Gewindearretierungen gegen Verdrehen gesichert.

Da der Ankerschaft 4 in der Fundamentaussparung 3 abgesenkt ist, wird vorteilhaft das Aufstellen der Maschine in keiner Weise beeinträchtigt. Eine Fundamentplatte 2 dient dabei als Auflage der Maschine. Diese wird durch Feingussbeton 11 vollständig eingegossen. Der Maschinenfuss 8 wird auf die mit Stellschrauben 12 ausgerichtete bzw. nivellierte Fundamentplatte 2 aufgelegt und der Ankerschaft 4 wird über eine Dehnschraube/Gewindebolzen 9 durch den Maschinenfuss 8 hindurch mit einem sich in dem Ankerschaft 4 befindenden Innengewinde 6 verbunden. Wie aus der Figur ersichtlich wird als letzter Verfahrensschritt der Befestigung der Ankerschaft 4 durch eine obere Spannmutter 10 vorgespannt. Die im Ankerschaft 4 eingeschraubte Dehnschraube bzw. der Gewindebolzen 9 kann durch einen Drehmomentenschlüssel gut montiert werden oder auch hydraulisch vorgespannt werden. Nach dem Vorspannen wird die Spannmutter 10 gegen Losdrehen gesichert. Die Stellschrauben 12 werden anschliessend entfernt.

### BEZUGSZEICHENLISTE

- **1**: Fundament
- **2**: Fundamentplatte
- **3**: Fundamentaussparung
- **4**: Ankerschaft
- **5**: Gewindescheibe
- **6**: Innengewinde
- **7₁, 7₂**: Beton
- **8**: Maschinenfuss
- **9**: Dehnschraube/Gewindebolzen
- **10**: Spannmutter
- **11**: Feingussbeton
- **12**: Stellschraube

## Patentansprüche

1. Befestigungsvorrichtung eines Maschinenfußes (8) einer Maschine an Fundamenten (1), bestehend aus
- einer sich im Fundament (1) befindenden Fundamentaussparung (3),
- einer Fundamentplatte (2) aus Stahl auf der Oberfläche des Fundaments (1), dem Maschinenfuß (8) auf der Oberfläche der Fundamentplatte (1),
- einem die Maschine gegen das Fundament (1) verspannenden Ankerschaft (4), wobei sich der Ankerschaft (4) in der Fundamentaussparung (3) befindet und an seinem unteren Ende mindestens zwei voneinander versetzt angeordnete Scheiben (5) aufweist,
- wobei die Fundamentaussparung (3) mit Beton (7₁, 7₂) ausgefüllt ist und
- wobei eine Dehnschraube bzw. ein Gewindebolzen (9) durch die Fundamentplatte (2) und den Maschinenfuß (8) hindurch geführt, mit dem Ankerschaft (4) verbunden und vorgespannt ist,
**dadurch gekennzeichnet,**
- **dass** die Scheiben als Gewindescheiben (5) ausgestaltet sind,
- **dass** die Dehnschraube bzw. der Gewindebolzen (9) bezüglich des Ankerschafts (4) ein separates Bauteil ist,
- **dass** der Ankerschaft (4) in seinem oberen Ende ein Innengewinde (6) aufweist,
- **dass** die Dehnschraube bzw. der Gewindebolzen (9) in das Innengewinde (6) eingeschraubt ist.

2. Befestigungsvorrichtung nach Anspruch 1,
**dadurch gekennzeichnet,**
**dass** der Ankerschaft (4) zwischen den beiden Gewinden der Gewindescheiben (5) im Schaftdurchmesser verjüngt ist.

3. Befestigungsvorrichtung nach Anspruch 1 oder 2,
**dadurch gekennzeichnet,**
**dass** die Gewindescheiben (5) durch Gewindearretierungen gegen Verdrehen gesichert sind.

4. Befestigungsvorrichtung nach einem der Ansprüche 1 bis 3,
**dadurch gekennzeichnet,**
**dass** die Dehnschraube bzw. der Gewindebolzen (9) durch eine Spannmutter (10) vorgespannt ist.

5. Befestigungsvorrichtung nach einem der Ansprüche 1 bis 4,
**dadurch gekennzeichnet,**
**dass** sich zwischen der Oberfläche des Fundaments (1) und der Fundamentplatte (2) eine Schicht Feinbeton (11) befindet.

6. Verfahren zur Befestigung eines Maschinenfußes (8) einer Maschine auf einem Fundament (1), enthaltend folgende Verfahrensschritte:
- Bereitstellen einer Fundamentaussparung (3) in dem Fundament (1), wobei in der Fundamentaussparung (3) ein innenliegender Ankerschaft (4) vorhanden ist und der Ankerschaft (4) mindestens zwei voneinander versetzt angeordnete Gewindescheiben (5) aufweist,
- Auffüllen der Fundamentaussparung (3) mit Beton (7₁, 7₂) und Aushärten des Betons (7₁, 7₂),
- Auflegen einer Fundamentplatte (2) aus Stahl auf die Oberfläche des Fundaments (1),
- Aufsetzen des Maschinenfußes (8) auf die Fundamentplatte (2),
**gekennzeichnet durch** folgende Verfahrensschritte:
- Verbinden des Ankerschafts (4) **durch** den Maschinenfuß (8) und die Fundamentplatte (2) hindurch mit einer Dehnschraube oder mit einem Gewindebolzen (9) **durch** Einschrauben der Dehnschraube bzw. des Gewindebolzens (9) in ein sich im Ankerschaft (4) befindendes Innengewinde (6) und
- Vorspannen der Dehnschraube bzw. des Gewindebolzens (9).

7. Verfahren nach Anspruch 6,
**dadurch gekennzeichnet,**
**dass** in die Fundamentaussparung (3) zuerst eine erste Schicht Beton (7₁) eingefüllt wird, so dass mindestens die untere Gewindescheibe (5) eingegossen wird, und danach eine zweite Schicht Beton (7₂) eingefüllt, die den restlichen Teil der Fundamentaussparung (3) füllt.

8. Verfahren nach Anspruch 6 oder 7,
**dadurch gekennzeichnet,**
**dass** der Ankerschaft (4) durch eine obere Spannmutter (5) vorgespannt wird und nach dem Vorspannen die obere Spannmutter (5) gegen Losdrehen gesichert wird.

9. Verfahren nach einem der Ansprüche 6 bis 8,
**dadurch gekennzeichnet,**
**dass** der Dehnschraube/Gewindebolzen (9) hydraulisch oder durch einen Drehmomentenschlüssel vorgespannt wird.

10. Verfahren nach einem der Ansprüche 6 bis 9,
**dadurch gekennzeichnet,**
**dass** nach dem Auflegen der Fundamentplatte (2) diese mittels sich in der Fundamentplatte (2) befindenden Stellschrauben (12) ausgerichtet wird und nach Befestigung des Maschinenfußes (8) die Stellschrauben (12) entfernt werden.

## Claims

1. Fastening arrangement of a machine base (8) of a machine on foundations (1), consisting of
- a foundation recess (3) located in the foundation (1),
- a foundation plate (2) of steel on the surface of the foundation (1),
- the machine base (8) on the surface of the foundation plate (2),
- an anchor shank (4) restraining the machine against the foundation (1), the anchor shank (4) being located in the foundation recess (3) and having at its lower end at least two disks (5) arranged offset from one another,
- the foundation recess (3) being filled with concrete (7₁, 7₂), and
- an anti-fatigue bolt or a stud bolt (9) being passed through the foundation plate (2) and the machine base (8), connected to the anchor shank (4) and preloaded,
**characterized**
- **in that** the disks are designed as threaded disks (5),
- **in that** the anti-fatigue bolt or the stud bolt (9) is a separate component from the anchor shank (4),
- **in that** the anchor shank (4) has, in its upper end, an internal thread (6),
- **in that** the anti-fatigue bolt or the stud bolt (9) is screwed into the internal thread (6).

2. Fastening arrangement according to claim 1, **characterized in that** the anchor shank (4) is narrowed in the shank diameter between the two threads of the threaded disks (5).

3. Fastening arrangement according to claim 1 or 2, **characterized in that** the threaded disks (5) are secured against rotation by threaded locking means.

4. Fastening arrangement according to one of claims 1 to 3, **characterized in that** the anti-fatigue bolt or the stud bolt (9) is preloaded by a clamping nut (10).

5. Fastening arrangement according to one of claims 1 to 4, **characterized in that** a layer of fine concrete (11) is located between the surface of the foundation (1) and the foundation plate (2).

6. Method of fastening a machine base (8) of a machine on a foundation (1), containing the following method steps:
- preparation of a foundation recess (3) in the foundation (1), there being an inner anchor shank (4) in the foundation recess (3), and the anchor shank (4) having at least two threaded disks (5) arranged offset from one another,
- filling the foundation recess (3) with concrete (7₁, 7₂) and hardening the concrete (7₁, 7₂),
- putting a foundation plate (2) of steel onto the surface of the foundation (1),
- setting down the machine base (8) on the foundation plate (2),
**characterized by** the following method steps:
- connecting the anchor shank (4) through the machine base (8) and the foundation plate (2) by means of an anti-fatigue bolt or a stud bolt (9) by screwing the anti-fatigue bolt or stud bolt (9) into an internal thread (6) located in the anchor shank (4), and
- preloading the anti-fatigue bolt or stud bolt (9).

7. Method according to claim 6, **characterized in that** first of all a first layer of concrete (7₁) is poured into the foundation recess (3), so that at least the bottom threaded disk (5) is cast in place, and after that a second layer of concrete (7₂) is poured in and fills the remaining part of the foundation recess (3).

8. Method according to claim 6 or 7, **characterized in that** the anchor shank (4) is preloaded by a top clamping nut (5), and the top clamping nut (5) is secured against loosening after the preloading.

9. Method according to one of claims 6 to 8, **characterized in that** the anti-fatigue bolt/stud bolt (9) is hydraulically preloaded or is preloaded by a torque wrench.

10. Method according to one of claims 6 to 9, **characterized in that**, after the foundation plate (2) has been put on, it is oriented by means of adjusting screws (12) located in the foundation plate (2), and the adjusting screws (12) are removed after the fastening of the machine base (8).

## Revendications

1. Dispositif de fixation d'un pied de machine (8) d'une machine sur un socle (1), constitué :
- d'un évidement du socle (3) pratiqué dans le socle (1),
- d'une plaque de socle (2) en acier à la surface du socle (1),
- du pied de machine (8) sur la surface de la plaque de socle (2),
- d'un tirant d'ancrage (4) serrant la machine contre le socle (1), le tirant d'ancrage (4) se trouvant dans l'évidement du socle (3) et présentant à son extrémité inférieure au moins deux bagues (5) décalées l'une de l'autre,
- l'évidement du socle (3) étant rempli de béton (7₁, 7₂) et
- une vis de dilatation ou un boulon fileté (9) étant guidé à travers la plaque de socle (2) et le pied de machine (8), étant connecté au tirant d'ancrage (4) et précontraint,
**caractérisé en ce que**
- les bagues sont réalisées sous forme de bagues filetées (5),
- la vis de dilatation ou le boulon fileté (9) est un composant séparé par rapport au tirant d'ancrage (4),
- le tirant d'ancrage (4) présente un filetage interne (6) dans son extrémité supérieure,
- la vis de dilatation ou le boulon fileté (9) est vissé dans le filetage interne (6).

2. Dispositif de fixation selon la revendication 1,
**caractérisé en ce que**
le tirant d'ancrage (4) a un diamètre de tirant rétréci entre les deux filetages des bagues filetées (5).

3. Dispositif de fixation selon la revendication 1 ou 2,
**caractérisé en ce que**
les bagues filetées (5) sont fixées contre toute rotation par des blocages filetés.

4. Dispositif de fixation selon l'une quelconque des revendications 1 à 3,
**caractérisé en ce que**
la vis de dilatation ou l'écrou fileté (9) est précontraint par un écrou de serrage (10).

5. Dispositif de fixation selon l'une quelconque des revendications 1 à 4,
**caractérisé en ce qu'**
une couche de béton fin (11) est disposée entre la surface du socle (1) et la plaque de socle (2).

6. Procédé de fixation d'un pied de machine (8) d'une machine sur un socle (1), contenant les étapes de procédé suivantes :
- fourniture d'un évidement de socle (3) pratiqué dans le socle (1), un tirant d'ancrage (4) situé à l'intérieur étant prévu dans l'évidement de socle (3) et le tirant d'ancrage (4) présentant au moins deux bagues filetées (5) décalées l'une de l'autre,
- remplissage de l'évidement de socle (3) avec du béton (7₁, 7₂) et durcissage du béton (7₁, 7₂),
- pose d'une plaque de socle (2) en acier sur la surface du socle (1),
- mise en place du pied de machine (8) sur la plaque de socle (2),
**caractérisé par** les étapes de procédé suivantes :
- connexion du tirant d'ancrage (4) à travers le pied de machine (8) et la plaque de socle (2) à une vis de dilatation ou à un boulon fileté (9) par vissage de la vis de dilatation ou du boulon fileté (9) dans un filetage interne (6) se trouvant dans le tirant d'ancrage (4) et
- précontrainte de la vis de dilatation ou du boulon fileté (9).

7. Procédé selon la revendication 6,
**caractérisé en ce que**
l'on verse d'abord une première couche de béton (7₁) dans l'évidement de socle (3), de sorte qu'au moins la bague filetée inférieure (5) soit coulée, et ensuite on verse une deuxième couche de béton (7₂) qui remplit la partie restante de l'évidement de socle (3).

8. Procédé selon la revendication 6 ou 7,
**caractérisé en ce que**
le tirant d'ancrage (4) est précontraint par un écrou de serrage supérieur (5) et après la précontrainte, l'écrou de serrage supérieur (5) est fixé pour l'empêcher de se dévisser.

9. Procédé selon l'une quelconque des revendications 6 à 8,
**caractérisé en ce que**
la vis de dilatation/le boulon fileté (9) est précontraint hydrauliquement ou par une clé dynamométrique.

10. Procédé selon l'une quelconque des revendications 6 à 9,
**caractérisé en ce**
**qu'**après la pose de la plaque de socle (2), celle-ci est orienté au moyen de vis de réglage (12) se trouvant dans la plaque de socle (2), et après la fixation du pied de machine (8), les vis de réglage (12) sont enlevées.
